Europäisches Patentamt

European Patent Office

Office européen des brevets

(11) Publication number: **0 191 629**
A2

# (12) EUROPEAN PATENT APPLICATION

(21) Application number: **86300927.0**

(22) Date of filing: **11.02.86**

(51) Int. Cl.⁴: **C 09 D 3/49**

(30) Priority: **11.02.85 GB 8503435**

(71) Applicant: **Coates Brothers PLC, Cray Avenue St. Mary Cray, Orpington Kent BR5 3PP (GB)**

(43) Date of publication of application: **20.08.86 Bulletin 86/34**

(72) Inventor: **Zissell, Martin John, 40 Drayton Avenue, Orpington Kent (GB)**
Inventor: **Southwell, Mark Jonathan, 55 St. Georges Road, Swanley Kent (GB)**

(84) Designated Contracting States: **AT BE DE FR GB IT LU NL**

(74) Representative: **Lamb, John Baxter et al, Marks & Clerk 57/60 Lincoln's Inn Fields, London WC2A 3LS (GB)**

(54) **Coating compositions.**

㊷ Coating compositions comprise:
(a) an autoxidisable air-drying film-forming material:
(b) from 1 to 25% by weight, based on the weight of component (a), of particulate polymeric material having a particle size of not more than 20 μm and a glass transition temperature of 10°C or less; and, optionally,
(c) a volatile organic solvent which is a solvent for component (a) but is a non-solvent for component (b).

EP 0 191 629 A2

M&C FOLIO: 230P49304                    WANGDOC: 0202i

## Coating Compositions

This invention is concerned with improvements in and relating to coating compositions and, more particularly, is concerned with coating compositions containing air-drying materials as principal film-forming components.

Coating compositions, such as paint and varnishes, containing autoxidisable materials, such as alkyd resins, as principal film-forming components are, of course, very well known and have been used for many years. One disadvantage of such coating compositions, especially when used as exterior decorative or protective coatings, is the fact that they deteriorate or embrittle on ageing. It is an object of the present invention to provide an air-drying resin-based coating composition having improved resistance to ageing.

According to the invention there is provided a coating composition comprising:

(a) an autoxidisable air-drying film-forming material;

(b) from 1 to 25% by weight, based on the weight of component (a), of particulate polymeric material

2

having a particle size of not more than 20 μm and a glass transition temperature ($T_g$) of 10°C or less; and, optionally,

(c) a volatile organic solvent which is a solvent for component (a) but which is a non-solvent for component (b).

As will be appreciated, the compositions of the invention, when containing volatile organic component (c), essentially take the form of a dispersion of component (b), the particulate polymer, in a solution of component (a) in the volatile organic solvent component (c). On application to a substrate, the composition dries and cures to give a dried film containing particulate polymer dispersed therein.

Autoxidisable air-drying film-forming materials may be defined as materials containing unsaturated groups that can be dried by oxidation to give a cross-linked film. The film-forming mechanism involves a variety of processes which commonly take place more or less concurrently; namely evaporation of solvent (if present), oxygen uptake, polymerization and crosslinking, accompanied by loss of volatile products. The polymerization mechanism usually involves the formation of hydroperoxide groups and their subsequent reaction. Methylene groups, for example which are adjacent to ethylenic carbon-carbon double bonds, are activated and subject to attack by oxygen because it is believed that the removal of hydrogen gives the resonance stabilised allylic structure.

Examples of autoxidisable film-forming materials include vegetable oils (such as linseed, perilla and dehydrated castor oils); oleoresinous varnishes; alkyd resins and modified alkyd resins; epoxy esters; and allyl ether resins.

Autoxidisable film-forming materials are described, for example, in "The Chemistry of Organic Film Formers", Solomon D. H., Kreiger, 1977; and in "Paint Technology Manuals", Part III, O.C.C.A., page 126-127 and 169-170.

A preferred class of autoxidisable film-forming materials comprises the alkyd and modified alkyd resins.

Alkyd resins are well-known and may be defined as autoxidatively curable film-forming materials containing ethylenically unsaturated long chain aliphatic residues derived, directly or indirectly, from so-called "drying oils", that is glycerides of ethylenically unsaturated long chain fatty acids. Typically alkyd resins comprise polyesters of such unsaturated long chain fatty acids

4

with polyhydric alcohols, such as glycerol, together with other carboxylic acids, especially dicarboxylic acids or their anhydrides such as phthalic anhydride. Frequently, the alkyd resins used in coating compositions are so-called "modified" alkyd resins and mention may be made, for example, of resin-modified alkyd resins, vinylated alkyds, urethane alkyds and oils, thioxotropic alkyds, allyl ether modified alkyds and silicone modified alkyds.

As is common with air-drying film-forming compositions, the compositions of the invention will generally also contain one or more so-called "driers". Examples of such driers include compounds of metals such as lead, cobalt, and manganese, and examples of such compounds are cobalt naphthenate and manganese octoate. These driers will be used in conventional amounts, e.g. from 0.01 to 0.06 % by weight based on the weight of the air-drying component.

The second essential component of the compositions of the invention comprises particulate polymeric material having a particle size of less than 20 μm and a glass transition temperature of 10°C or less. The particulate polymer preferably has a glass transition temperature of not less than -50°C and a particularly preferred range of glass transition temperature is from

5

-30 to 0°C. In general it has been found that polymers of higher glass transition temperature should be used in higher amounts than those of lower glass transition temperature and vice versa.

The dispersed polymer may be an addition polymer or a condensation polymer and may be prepared in dispersion or preformed and subsequently dispersed in a suitable liquid vehicle.

Finely divided addition polymers may be prepared by the well-known techniques of emulsion polymerization (using water as liquid polymerization medium) or dispersion polymerization in a non-aqueous medium, typically a paraffinic hydrocarbon. In the case of emulsion polymerization, polymerization of the appropriate monomer or monomers is generally carried out in the presence of a surface-active agent or stabilizer to stabilize the resultant emulsion.

Dispersion polymerization in non-aqueous media is described, for example, in the book "Dispersion Polymerization in Organic Media", by K.E.J. Barrett (John Wiley & Son, 1975). Basically, such a process comprises the free-radical initiated polymerization of the monomers in an inert liquid in which the monomers are soluble but the resulting polymer is not soluble, and in the presence of an amphipathic dispersing agent or a polymeric precursor therefor which, by copolymerization or grafting with a portion of the monomers, can give rise in situ to such a dispersing agent.

Typical ethylenically unsaturated monomers for use in such a process include acrylic acid and methacrylic acid and their esters such as methyl methacrylate, butyl methacrylate, ethyl acrylate, butyl acrylate and 2-ethyl hexyl acrylate; vinyl esters such as vinyl acetate; vinyl chloride; vinylidene chloride; vinyl aromatics such as styrene and vinyl toluene; and acrylonitrile and methacrylonitrile. Cross-linked addition polymers may be prepared by including in the monomer composition undergoing polymerization a minor portion of a difunctional monomer such as ethylene glycol dimethacrylate or divinyl benzene; or by the reaction, which may be catalyzed, between reactive groups, which may or may not be involved in the polymerization itself, such as carboxylic anhydride/epoxide, carboxylic acid/epoxide or hydroxyl/isocyanate or methylol groupings.

The production of dispersions of condensation polymers is described, for example, in British Patent Specifications Nos. 1373531, 1403794 and 1419199. The general principles in such polymerization are the same as those discussed above in connection with the addition polymer dispersions but there is a difference of detail arising from the commonly more highly polar nature of the monomers or starting materials from which condensation polymers are derived. Thus, the monomers in question are usually insoluble in the inert liquid in which the polymerization is to be carried out. Accordingly the first step in the dispersion polymerization of the monomers is to bring them into a state of colloidal dispersion in the inert liquid, either as liquid or solid particles. In the second step, polymerization of the monomers takes place mainly within these particles. An amphipathic dispersing agent is required in each stage, firstly in order to stabilize the particles of monomer and secondly in order to stabilize the particles of polymer formed and in some cases single dispersing agents can be found which will perform both these functions. A pre-formed amphipathic

8

dispersing agent may be used and also may be used a suitable polymeric precursor which, by copolymerization or grafting with a portion of the monomers being polymerized, can give rise to such a dispersing agent in situ as described, for example, in patent specification No. 1583142 or in "Encyclopedia of Polymer Science & Technology", Interscience, Supplementary Volume 1, page 330.

Suitable monomers for condensation polymers include, for making polyesters, polyhydric alcohols such as ethylene glycol, propylene glycol butylene glycol, diethylene glycol, triethylene glycol, glycerol and trimethylolpropane together with polycarboxylic acids such as succinic acid, adipic acid, azeleic acid, sebacic acid maleic acid, phthalic acid, or their anhydrides. In order to prepare polyamide particles suitable polymeric monomeric starting materials include aminocarboxylic acids such as 6-amino caproic acid or 11-aminoundecanoic acid, or the corresponding lactams, or polyamines such as ethylene diamine, propylene diamine and diethylene triamine together with polycarboxylic acids as discussed above. The ratio of reactants is usually chosen to give an overall functionality (f) of about 2. Compositions with functionality greater than 2 taken to high conversion will normally contain cross-linked microgel products.

9

The third component of the compositions of the invention is a volatile solvent in which, as noted above, the air-drying component should be soluble but the particulate polymer insoluble. Suitable solvents include aliphatic hydrocarbons and mixtures thereof such as various grades of white spirit.

The amount of solvent may vary within wide limits Thus the compositions of the invention may be formulated for dilution, prior to application, with further solvent or may be formulated with sufficient solvent for immediate application. Thus, for example, concentrated compositions in accordance with the invention may contain from 20 to 40 % by weight of solvent whereas compositions intended for immediate application by, for example, brushing may contain from 45 to 65 % by weight of solvent.

The compositions of the invention are prepared by mixing a solution of air-drying component, optionally in the volatile organic solvent with a dispersion of the particulate polymer component in a carrier liquid. Conveniently the carrier liquid for the particulate polymer may also be a volatile organic solvent which may be the same as that in which the air-drying component is dissolved or may be different, provided, of course, in the latter case that the solvents are miscible and that the resultant mixed solvent is a solvent for the air-drying component and a non-solvent for the particulate polymer. Such a dispersion may be obtained by the dispersion polymerization processes described above.

The compositions of the invention may contain other ingredients in addition to the essential components noted above. These may be added to a preformed composition comprising air-drying component, particulate polymer and solvent or may be added to alkyd resin solution before blending of the latter a dispersion of particulate polymer. Examples of such further ingredients include pigments, extenders and flow control agents. These additional ingredients will generally be present in conventional amounts employed in air-drying film forming compositions.

In order that the invention may be well understood the following Examples are given by way of illustration only. In the examples all parts and percentages are by weight unless otherwise stated.

<u>Preparative Example 1</u>

<u>(a)  Preparation of dispersion stabilizer.</u>

A dispersion stabiliser was made as follows.

162 Parts of hydroxy stearic acid with 6% of xylene were condensed at 240°C until the acid value reached 35 mg KOH/gm.  The batch was cooled and the following ingredients added thereto:  0.07 parts of hydroquinone, 0.14 parts of Armeen DCCM, 60 parts xylene, 8.8 parts of glycidyl methacrylate.  The reaction mixture was then held at 160°C until the acid value fell below 1 mg KOH/g.

The batch was cooled and mixed with 168 parts of methyl methacrylate, 6.8 parts of azobis-isobutyronitrile and 3.4 parts of methacrylic acid.

To a separate flask fitted with stirrer, heating mantle, nitrogen inlet, reflux condenser and addition funnel were charged 122 parts ethyl acetate, and 61 parts butyl acetate.  The mixture was warmed to reflux (about 75°C) and the above blend or premix added over a period of three hours.  The batch was held for a further 2 hours at 75°C until the non-volatile content reached 57%.

12

## (b)  Preparation of polymer dispersion

A mixture of 1350 parts of heptane, 60 parts of the stabilizer prepared in (a) above, 3.0 parts of azobis-isobutyronitrile, 40 parts of methyl methacrylate and 6 parts of methacrylic acid were charged to a flask equipped with stirrer, heating mantle, temperature controller probe, nitrogen inlet, addition funnel and water cooled condenser.

The batch was heated to 98°C and held at that temperature for one hour.  There was then added thereto, over a period of 90 minutes, a mixture of 430 parts of ethyl acrylate, 20 parts of glycidyl methacrylate, 2.5 parts of azobis-isobutyronitrile (initiator), 2 parts of the stabilizer of (a) above.

A further mixture of 430 parts of ethyl acrylate, 20 parts of methacrylic acid, 2.5 parts of initiator, 4 parts of stabilizer of (a) above, and 2.4 parts of Armeen DMCD was added over a similar period.  The batch, a milky white low viscosity dispersion was held at 98°C until the non-volatile content reached 42%.  The calculated polymer backbone glass transition temperature was -16°C before cross- linking.

13

## Preparative Example (2)

To a flask equipped as in preparative example 1(b) were charged 125 parts of n-heptane, 0.25 parts of azobis-isobutyronitrile ("AZBN"), 0.07 parts of methacrylic acid, 3 parts of the stabiliser of Example 1(a), 2.8 parts of ethyl acetate and 3.4 parts of methyl methacrylate. The batch was stirred and heated to 97°C. A premix of 40.7 parts of ethyl acrylate, 2.2 parts of glycidyl methacrylate, 0.25 parts of AZBN, and 0.42 parts of the stabiliser was added over a period of 90 minutes.

The dispersion was held at 97°C for a further 60 minutes before a second premix of 27.5 parts of isobutyl methacrylate, 16.9 parts of butyl acrylate, 2 parts of dimethylaminoethyl methacrylate, 0.25 parts of AZBN, 0.42 parts of the stabiliser, 0.2 parts of Armeen DMCD and 2.2 parts of methacrylic acid was added over 90 minutes and the batch held for a further hour before being cooled and discharged.

## Preparative Example 3

To a flask set up as in Example 1(b) was charged 175.6 parts of the product of Preparative Example 2 and the stirred dispersion was warmed to 97°C. A premix of

14

isobutyl methacrylate (17.6 parts), dimethylaminoethyl methacrylate (7.0 parts), the stabilizer of Example 1(a) (0.9 parts), n-heptane (7 parts) and AZBN (0.37 parts) was added over a period of 90 minutes and the mixture was then held for a further two hours. A final portion of AZBN was added and the batch held until the non-volatile content reached 55.6%, when the high shear viscosity was 4 poise. The calculated glass transition temperature of the polymer from the monomers used in Example 2 was -5°C and when overcoated as in this example, was +12.5°C.

## Preparative Example 4

To a flask equipped as in Example 1(b) was added:-

116 parts dispersant (see below)

50 parts methyl methacrylate

8 parts benzoyl peroxide (60% paste)

610 parts white spirit (high flash)

The charge was heated to 90°C and the following premix dripped in over a period of 4 hours:

226 parts methyl methacrylate

550 parts butyl acrylate

40 parts benzoyl peroxide (60% paste)

15

80 parts acrylic acid.

The batch was held for a further two hours, 10 parts more of initiator added and some solvent removed under vacuum after three hours processing to give a 40.6% solution of the polymer.

The stabiliser used in the above was a copolymer of lauryl methacrylate and acrylic acid in ratio 100 to 1.7 by weight, subsequently reacted with an equivalent amount of glycidyl methacrylate to give a 47% solution of polymer, acid value 4, in aliphatic solvent (boiling range 155° - 170°C).

The glass transition temperature of the backbone was calculated to be -11.4°C.

Preparative Example 5

To a flask equipped with heating bath, stirrer, nitrogen inlet, addition funnel, thermometer and Dean and Stark trap with water cooled double surface condenser, were charged 200 parts of petroleum solvent boiling range 165°C - 195°C, 31 parts of phthalic anhydride, 94.4 parts of adipic acid, 0.1 parts of catalyst (butyl titanate) and 28.6 parts of a stabiliser (see below). The charge was vigorously agitated and heated to reflux temperature, when a warm blend of 1.6 hexane diol (14 parts), 1.4 butane diol (11 parts) and trimethylol propane (16 parts) was added over a period of 10 minutes. A similar quantity of polyol mix was added over 90 minutes while water of reaction was distilled off and collected.

When the acid value reached 33 mg KOH/g, the batch was cooled and bottled.

The stabiliser consisted of a 63% solution of a copolymer of technical grade lauryl methacrylate with glycidyl methacrylate in 4:1 ratio made in high flash white spirit with benzoyl peroxide initiator to give a viscosity of 22 poise at 25°C.

Preparative Example 6

The procedure of Preparative Example 5 was repeated except that the quantity of stabiliser was increased by one third to give a more stable product with an acid value of 30 mg KOH/g.

Example 1

SYNOLAC 28W, a 65% oil length alkyd based on soya oil, pentaerythritol and phthalic anhydride in white spirit, made by CRAY VALLEY PRODUCTS LTD. (driers: 0.5% lead, 0.05% cobalt on alkyd non-volatiles) was used as a control. Varnishes were prepared having the compositions listed below and applied to treated aluminium panels to give approximately 25 micron thick dried film and exposed at a site in Florida.

|  | Varnish No | | |
| --- | --- | --- | --- |
|  | 1 | 2 | 3 |
| Synolac 28W (solids) | 100 parts | 100 parts | 100 parts |
| Dispersion of Ex.1(b) (solids) | – | 20 parts | – |
| Dispersion of Ex. 3 (solids) | – | – | 20 parts |

Panels were withdrawn after 2,4 and 6 months exposure and the results are shown in the following table. Inspection of the table of results shows that incorporation of the dispersion copolymer Preparative Example 1(b) helps to maintain the extensibility of the varnish coating on exposure, as judged by reverse impact, slow indentation and cone bend tests. The dispersion of Preparative Example 3 is also useful, but effective for a shorter period.

FLORIDA EXPOSUE TEST

| Varnish | INITIAL VALUES | | | | 2 MONTHS | | | |
|---|---|---|---|---|---|---|---|---|
| | Gloss 60° | Reverse Impact | Slow Indent mm | Cone Bend 10 = P 1 = F | Gloss 60° | Reverse Impact | Slow Indent mm | Cone Bend 10 = P 1 = F |
| 1 | 98.1 | Sub.F | Sub.F | 10 | 96.5 | 10 | 5.5 | 1 |
| 2 | 93 | 70 | Sub.F | 10 | 91.2 | 32 | 6.7 | 10 |
| 3 | 93.9 | Sub.F | Sub.F | 10 | 93.2 | 10 | 4.5 | 10 |
| | 4 MONTHS | | | | 6 MONTHS | | | |
| 1 | 72 | 3 | 2.3 | 1 | 60 | 2.8 | 2.8 | 3 |
| 2 | 98 | 16 | 5 | 9 | 31 | 15 | 7 | 8 |
| 3 | 60 | 2 | 4.8 | 3 | 51 | 3 | 4.6 | 2 |

Slow Indent - Sub. F indicates that the substrate failed before the resin at 7.9 mm - Indentation figures are indent at failure in mm.

Cone Bend - Rating is 10 = Pass, 1 = Severe Failure.

Reverse Impact - Expressed as the minimum energy required to break film - in lbs.

## Example 2

Blends of SYNOLAC 28 W and the dispersion of Preparative Example 4 from 10:1 to 1:1 ratio by weight were made up, driers added and films applicated on a series of opacity charts and allowed to dry. Inspection showed that the films containing 30% or more of the dispersion were slightly hazy and slightly tacky to the touch.

## Example 3

SYNOLAC 58W, a rosin modified alkyd, supplied by CRAY VALLEY PRODUCTS LTD, is not normally used as the sole medium for a paint or varnish as it tends to give rather brittle films. Mixtures were made up as shown in the following Table and applied to standard aluminium panels, to give dried films approximately 25 microns thick and these were exposed in a QUV Accelerated Weathering Tester (made by the Q-panel Company) for a total of 260 light hours. After this period, when the panels were removed, it was found that the metal substrate failed before either of the varnish coatings in the reverse impact test.

20

|                              | Parts |      |
| ---------------------------- | ----- | ---- |
| Synolac 58W (62%)            | 16    | 16   |
| Dispersion of Ex. 5 (46.5%)  | 4.3   | –    |
| Dispersion of Ex. 6 (52%)    | –     | 3.85 |
| White Spirit (to 50%)        | 3.6   | 4.1  |

Claims:-

1. A coating composition characterised in that it comprises:

(a) an autoxidisable air-drying film-forming material; and

(b) from 1 to 25% by weight, based on the weight of component (a) of particulate polymeric material having a particle size of not more than 20 μm and a glass transition temperature of 10°C or less.

2. A composition as claimed in claim 1 characterised in that it also contains a volatile organic solvent which is a solvent for component (a) but a non-solvent for component (b).

3. A composition as claimed in claim 1 or claim 2 characterised in that the air-drying component is an alkyd resin.

4 A composition as claimed in any one of the preceding claims characterised in that the particulate polymer has a glass transition temperature of not less than -50°C, preferably from -20 to 0°C.